# EUROPEAN PATENT APPLICATION

(11) **EP 3 778 490 A1**
(43) Date of publication of application: **17.02.2021**
(21) Application number: 19775401.3
(22) Date of filing: 21.02.2019
(51) Int. Cl.: C01G 35/02

(54) **TANTALUM CHLORIDE AND METHOD FOR PRODUCING TANTALUM CHLORIDE**

(30) Priority: 28.03.2018 JP 2018063132
(71) Applicant: Toho Titanium CO., LTD., Chigasaki-shi Kanagawa 253-8510 (JP); JX Nippon Mining & Metals Corporation, Tokyo 100-8164 (JP)
(72) Inventor: TANI, Seiichiro, Chigasaki-shi, Kanagawa 253-8510 (JP); FUKASAWA, So, Chigasaki-shi, Kanagawa 253-8510 (JP); TAKAHASHI, Hideyuki, Kitaibaraki-shi Ibaraki 3191535 (JP)
(74) Representative: Mewburn Ellis LLP
(86) International application number: PCT/JP2019/006599
(87) International publication number: WO 2019/187836

(57) **Abstract**

The tantalum chloride according to the present invention contains TaCl₅, and has a total content of tantalum subchlorides of 1% by mass or less.

## Description

### FIELD OF THE INVENTION

The present invention relates to a tantalum chloride and a method for producing a tantalum chloride. More particularly, it proposes a technique capable of increasing the purity of TaCl₅.

### BACKGROUND OF THE INVENTION

Tantalum chlorides, including tantalum pentachloride, may be used, for example, as co-catalysts for generating fluorinated hydrocarbons used in the production of coolants, or additives for corrosion-resistant conductors, as well as high-purity chemical vapor deposition precursors for producing microprocessors and memory chips, or the like.

Among the applications as described above, tantalum chlorides containing tantalum pentachloride with extremely high purity may be required, particularly when tantalum pentachloride is used in a metal organic chemical vapor deposition method (MOCVD), an atomic layer deposition method (ALD), and the like.

In addition, Patent Literature 1 relates to a technique for recovering high-purity tantalum and a tantalum derivative from tantalum scrap. It discloses that in a process of the recovery, tantalum scrap is heated to 250°C or higher and allowed to react directly with a chlorine gas to produce an anhydrous chloride. Further, it discloses that, by utilizing a boiling point difference of the chloride thus obtained, substances having a lower boiling point and higher boiling point other than tantalum are removed by distillation purification. It also discloses that according to this, high-purity tantalum pentachloride can be obtained.

However, there is no disclosure in Patent Literature 1 of optimization of a temperature during heating, an actual arrangement of tantalum scrap in an apparatus, or the like. Therefore, it is difficult to say that Patent Literature 1 considers a specific method for chlorinating tantalum.

### CITATION LIST

### Patent Literatures

[Patent Literature 1] Japanese Patent Application Publication No. H03-28334 A

### SUMMARY OF THE INVENTION

### Technical Problem

Conventional tantalum chloride products available from the market at present contain a relatively higher volume of tantalum subchlorides rather than tantalum pentachloride such as tantalum tetrachloride, hereafter abbreviated as "subchlorides", and they also have higher metallic impurities.

Further, under the present circumstances, it is hard to say that a method capable of effectively producing tantalum chlorides containing tantalum pentachloride with higher volume (higher chemical composition purity) has been considered thoroughly.

Patent Literature 1 discloses that the heating temperature of tantalum scrap is set to 250°C or higher. However, only by setting such a temperature condition, tantalum pentachloride having certain higher chemical composition purity could not be obtained.

The present invention is intended to solve such conventional problems. An object of the present invention is to provide a tantalum chloride having a decreased content of tantalum subchlorides , and a method for producing the tantalum pentachloride with higher chemical composition purity.

### Solution to Problem

As a result of intensive studies, the present inventors have obtained the following findings, in heating of a tantalum raw material under a chlorine atmosphere to chlorinate the tantalum raw material when producing the tantalum chloride. That is, in chlorination of the tantalum raw material, it is important to use a tantalum chlorination apparatus and form a packed bed of the tantalum raw material in a raw material reaction tube of the apparatus. In addition, the present inventors have found that a content of the tantalum subchlorides in the produced tantalum pentachloride can be effectively decreased by setting a reaction temperature of the tantalum raw material during heating and a flow rate of a chlorine gas fed to the raw material reaction tube to predetermined ranges, respectively.

Under such findings, the tantalum chloride according to the present invention contains TaCl₅, and has a total content of tantalum subchlorides of 1% by mass or less.

Here, the total content of the tantalum subchlorides is preferably 0.1% by mass or less.

The tantalum chloride according to the present invention has a total content of Ta and CI of preferably 99.999% by mass or more, and more preferably 99.9999% by mass or more.

It is preferable that the tantalum chloride according to the present invention has a total content of Na, K, Co, Fe, Ni, Cu, Cr, Mg, Al, Nb, W, Mo, U and Th as impurities of 1 ppm by mass or less.

The method for producing a tantalum chloride according to the present invention is a method for producing a tantalum chloride by heating a tantalum raw material in a chlorine atmosphere to chlorinate the tantalum raw material, the method comprising the steps of: using a tantalum chlorinating apparatus, filling a raw material reaction tube of the tantalum chlorinating apparatus with the tantalum raw material to form a packed bed of the tantalum raw material, and feeding a chlorine gas to the raw material reaction tube to provide the raw material reaction tube with the chlorine atmosphere; and setting a reaction temperature of the tantalum raw material during heating to a temperature of 200°C to 700°C, and setting a flow rate of the chlorine gas fed to the raw material reaction tube during heating of the tantalum raw material to 0.05 cm/s to 0.82 cm/s.

In the method for producing the tantalum chloride according to the present invention, it is preferable that the chlorine gas is allowed to flow in the same direction as a filling direction of the tantalum raw material in the raw material reaction tube.

In the method for producing the tantalum chloride according to the present invention, it is preferable that the raw material reaction tube is arranged so as to stand up such that the filling direction of the tantalum raw material in the raw material reaction tube is in a direction inclined or orthogonal to a horizontal plane, and the chlorine gas is allowed to flow from a lower side to an upper side of the packed bed of the tantalum raw material.

In the method for producing the tantalum chloride according to the present invention, it is preferable that during heating of the tantalum raw material, a gas inflow side portion into which the chlorine gas flows, of the packed bed of the tantalum raw material, is set to the reaction temperature, and a remaining portion on a side where the chlorine gas flows out, of the packed bed of the tantalum raw material, is set to 234°C to 468°C.

In the method for producing the tantalum chloride according to the present invention, a packing density of the tantalum raw material in the raw material reaction tube is preferably from 0.1 g/cm³ to 5.0 g/cm³.

### Advantageous Effects of Invention

According to the present invention, it is possible to produce a tantalum chloride in which the total content of the tantalum subchlorides is as low as 1% by mass or less. Such a tantalum chloride having the lower content of the tantalum subchlorides and mainly composed of TaCl₅ can be suitably used in a metal organic chemical vapor deposition method (MOCVD), an atomic layer deposition method (ALD) and the like.

### BRIEF DESCRIPTION OF THE DRAWINGS

FIG. 1 is a cross-sectional view illustrating a test apparatus used in a heating weight loss test for determining a content of a tantalum subchloride;
FIG. 2 is a cross-sectional view illustrating an example of a tantalum chlorination apparatus capable of producing a tantalum chloride according to an embodiment of the present invention; and
FIG. 3 is a cross-sectional view illustrating a tantalum chlorination apparatus used in Example 5.

### DETAILED DESCRIPTION OF THE INVENTION

Hereinafter, embodiments of the present invention will be described in detail.

A tantalum chloride according to an embodiment of the present invention is mainly composed of TaCl₅, in which the total content of tantalum subchlorides is 1% by mass or less. The tantalum chloride preferably has a total content of Ta and CI of 99.999% by mass or more. The tantalum chloride may contain at least one selected from the group consisting of Na, K, Co, Fe, Ni, Cu, Cr, Mg, Al, Nb, W, Mo, U and Th as impurities. However, the total content of them is preferably 1 ppm by mass or less.

### (Tantalum Pentachloride)

The content of TaCl₅ is preferably 99% by mass or more, and particularly preferably 99.9% by mass or more. When the content of TaCl₅ is lower, the formation of a film by MOCVD or ALD using the tantalum chloride as a precursor cannot provide any expected characteristics, and may deteriorate performance of a semiconductor substrate manufactured using the film. On the other hand, there is no upper limit of that content because a higher content of TaCl₅ is more desirable.

Since substances making up the tantalum chloride are TaCl₅, subchlorides and impurities, the content of TaCl₅ can be calculated by subtracting the contents of the tantalum subchlorides and the impurities from 100% by mass. Each measuring method of the contents of the tantalum subchlorides and the impurities will be described later.

### (Tantalum Subchlorides)

Examples of the tantalum subchlorides with respect to TaCl₅ include TaCl₃, TaCl₄, Ta₆Cl₁₄, TaCl₂ and the like. It is desirable that the amounts of such tantalum subchlorides in the tantalum chloride are as low as possible for the reason of deterioration of a yield in production of a high-purity precursor. Therefore, the total content of tantalum subchlorides is 1% by mass or less, and preferably 0.1% by mass or less.

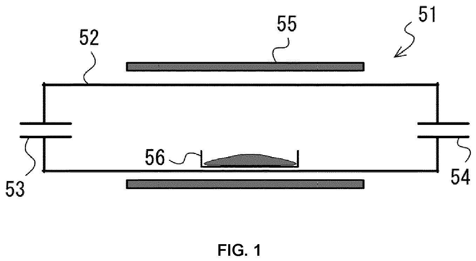

The contents of the tantalum subchlorides are measured by carrying out a heating weight loss test to determine a residue rate. The heating weight loss test can be conducted using a test apparatus 51 as shown in FIG. 1. The test apparatus 51 as shown in FIG. 1 is provided with an exhaust port 53 and an argon introducing pipe 54 at each end of a tubular container 52 having a diameter of 30 mm, and a heater 55 is arranged around the tubular container 52.

In order to conduct the heating weight loss test with the test apparatus 51 as shown in FIG. 1, a sample of 3 g of tantalum chloride is placed on a boat 56, which is placed in the tubular container 52. The sample is then heated by a heater 55 and an internal temperature of the tubular container 52 is maintained at 300°C for one hour, while introducing an argon at 0.1 L/min into the tubular container 52 from the argon introducing pipe 54. At this time, the internal temperature can be measured by a thermocouple (not shown). A temperature rising rate is 16°C/min. Subsequently, the temperature is decreased by natural cooling to lower the internal temperature to 50°C or less, and the sample is then collected together with the boat 56 and weighed. From the weighed value, the content of the tantalum subchlorides can be calculated by the following equation: tantalum subchlorides content (% by mass) = mass of sample after heating/mass before heating x 100. It should be noted that this test is conducted in a glove box having a water content of less than 0.1 ppm by mass.

### (Composition)

The tantalum chloride preferably has the total content of Ta and CI of 99.999% by mass or more, and more preferably 99.9999% by mass or more. Further, it may contain at least one selected from the group consisting of Na, K, Co, Fe, Ni, Cu, Cr, Mg, Al, Nb, W, Mo, U, and Th as an impurity, other than Ta and CI.

In this case, the total content of Na, K, Co, Fe, Ni, Cu, Cr, Mg, Al, Nb, W, Mo, U, and Th is preferably 1 ppm by mass or less. The contents of these elements are measured by an inductively coupled plasma mass spectrometer (ICP-MS).

If the contents of impurities as described above are increased, the performance of the semiconductor substrate may be deteriorated.

### (Production Method)

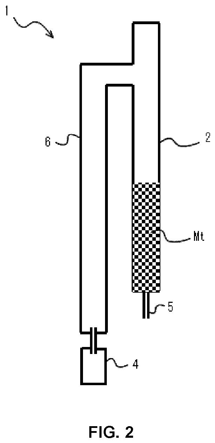

The tantalum chloride as described above can be produced using a tantalum chlorination apparatus 1 as illustrated in FIG. 2, for example.

The tantalum chlorination apparatus 1 as illustrated in FIG. 2 includes: a raw material reaction tube 2 having a circular pipe shape in which a metallic tantalum raw material Mt is arranged and the tantalum raw material Mt is heated while feeding a chlorine gas; and a raw material heating heater (not shown) disposed on the circumference of the raw material reaction tube 2 and heating the raw material reaction tube 2; and a chloride recovery chamber 4 in communication with the raw material reaction tube 2, into which a gaseous tantalum chloride generated by the reaction in the raw material reaction tube 2 flows and precipitates.

More specifically, in the tantalum chlorination apparatus 1, the raw material reaction tube 2 is arranged so as to stand up in a direction where its central axis is inclined or orthogonal to the horizontal plane, i.e., here, in a direction forming an angle of approximately 90° to the horizontal plane. The tantalum raw material Mt is provided in the raw material reaction tube 2, and a packed bed of the tantalum raw material Mt is formed therein. Granular quartz is filled on a rear side (the lower side in FIG. 2) of a rear end portion of the packed bed of the tantalum raw material Mt, which is located far away from the chloride recovery chamber 4, and a further rear side of that rear side is provided with a chlorine feed port 5 for feeding the chlorine gas toward the packed bed of the tantalum raw material Mt. Although not shown, the chlorine feed port 5 may be composed of a plurality of small holes provided at equal intervals in the cross section, such that the chlorine gas is evenly fed in the cross section of the raw material reaction tube 2.

A front side of the front end portion of the tantalum raw material Mt in the raw material reaction tube 2, that is, a side close to the chloride recovery chamber 4 is provided with a communication pipe 6 connected to the raw material reaction pipe 2 via a horizontal passage, which is disposed substantially parallel to the raw material reaction tube 2 to guide the tantalum chloride produced by the reaction in the raw material reaction tube 2 to the chloride recovery chamber 4.

Therefore, in the illustrated tantalum chlorination apparatus 1, the tantalum raw material Mt is heated by a raw material heating heater (not shown) in the raw material reaction tube 2 in the chlorine atmosphere generated by feeding the chlorine gas from the chlorine feed port 5, where the tantalum chloride is produced as a gas. The tantalum chloride passes from the raw material reaction tube 2 through the horizontal passage and the communication tube 6 in this order, and then flows into the container-shaped chloride recovery chamber 4, and is deposited in the chloride recovery chamber 4 by cooling. The chlorine gas flowing together with the gaseous tantalum chloride flows into a chlorine discharge port (not shown) that is branched in the middle of the communication pipe 6, and is collected by passing through a subsequent sodium hydroxide solution or the like (not shown).

The tantalum raw material Mt can be fed from a raw material feeding port (not shown) provided on the upper side of the packed bed of the tantalum raw material Mt in the raw material reaction tube 2. This can allow the tantalum raw material Mt in the packed bed of the tantalum raw material Mt being decreased due to the reaction to be supplied from the raw material feeding port to produce the tantalum chloride in a continuous manner.

In the production of the tantalum chloride using the tantalum chlorination apparatus 1, the tantalum raw material Mt is heated such that the reaction temperature of the tantalum raw material Mt in the raw material reaction tube 2 is from 200°C to 700°C. That is, if the reaction temperature of the tantalum raw material Mt is too high, a larger volume of the tantalum subchlorides is produced, so that the total content of the tantalum subchlorides in the tantalum chloride produced cannot be sufficiently decreased. On the other hand, if the reaction temperature of the tantalum raw material Mt is too low, the reaction does not proceed and TaCl₅ cannot be effectively produced. From this point of view, the reaction temperature of the tantalum raw material Mt is preferably from 300°C to 700°C, and more preferably from 400°C to 600°C.

In order to control the temperature to the reaction temperature of the tantalum raw material Mt as described above, it is, of course, important to adjust a set temperature of the raw material heating heater around the raw material reaction tube 2. In addition, it is also important to adjust a flow rate of the chlorine gas to be fed. This is because the flow rate of the chlorine gas changes a heating value of the tantalum raw material Mt and has an effect on the reaction temperature of the tantalum raw material Mt.

More particularly, upon heating of the tantalum raw material Mt, the flow rate of the chlorine gas to be fed to the raw material reaction tube 2 is preferably from 0.05 cm/s to 0.82 cm/s. If the flow rate of chlorine gas is less than 0.05 cm/s, a production rate may be decreased. On the other hand, if the flow rate of the chlorine gas is higher than 0.82 cm/s, the reaction temperature may be increased due to the heat of reaction, resulting in generation of a larger volume of subchlorides. Therefore, the flow rate of the chlorine gas is more preferably 0.08 cm/s or more and 0.57 cm/s or less. The flow rate of the chlorine gas is calculated by dividing a volume flow of chlorine to be introduced by a cross-sectional area of the packed bed portion of the tantalum raw material Mt. The flow rate of chlorine to be introduced is measured with a flow meter.

When controlling the reaction temperature of the tantalum raw material Mt, a packing density of the tantalum raw material Mt in the raw material reaction tube 2 is preferably from 0.1 g/cm³ to 5.0 g/cm³. That is, if the packing density of the tantalum raw material Mt is higher than 5.0 g/cm³, reaction sites are local without being dispersed, so that the heat of reaction may increase the temperature. Further, if the packing density is less than 0.1 g/cm³, uniform packing is difficult, and a partial flow of chlorine may occur in the packed bed of the tantalum raw material Mt, resulting in local reaction sites. The packing density of the tantalum raw material Mt is more preferably 0.8 g/cm³ or more, and particularly preferably from 1.3 g/cm³ to 2.4 g/cm³.

The packing density of the tantalum raw material Mt is determined by filling a container having a known volume with the tantalum raw material Mt and measuring a mass of the filled tantalum raw material Mt. In order to obtain the packing density as described above, a shape of the tantalum raw material Mt can be controlled.

In the tantalum chlorination apparatus 1 as shown in FIG. 2, the tantalum raw material Mt is filled in the raw material reaction tube 2 from the lower side toward the upper side. The chlorine gas also flows in the raw material reaction tube 2 from the lower side to the upper side in the same direction as the filling direction of the tantalum raw material Mt. By thus allowing the chlorine gas to flow in the raw material reaction tube 2 in the same direction as the filling direction of the tantalum raw material Mt, the reaction takes place from the rear end side (the lower side in FIG. 2) of the packed bed of the tantalum raw material Mt, and the tantalum chloride produced by that reaction will pass through the unreacted front end side (the upper side in FIG. 2). This can allow the tantalum subchlorides those may be contained in the tantalum chloride produced by that reaction to adhere to the unreacted front end of the packed bed of the tantalum raw material Mt and to be easily separated. As a result, it is possible to produce the tantalum chloride with the lower content of the lower tantalum chloride. In the case of the illustrated tantalum chlorination apparatus 1, the tantalum raw material Mt can be fed from the front end portion side of the packed bed of the tantalum raw material Mt, which front end portion is opposite to the rear end portion where the reaction occurs, through the raw material feeding port 9 as described above, thereby enabling more efficient continuous production.

In order to more effectively remove the tantalum subchlorides at the front end portion of the packed bed of the tantalum raw material Mt as described above, the raw material heating heater arranged around the raw material reaction tube 2 preferably has a heat insulating partition wall surrounding the raw material reaction tube 2 in the middle of the raw material reaction tube 2 in the axial direction. Further, the raw material heating heater preferably has a high temperature heating heater portion (not shown) and a low temperature heating heater portion which are divided by the heat insulating partition wall such that each portion of the raw material reaction tube 2 separated by the heat insulating partition wall can be heated at different temperatures.

In this case, the high temperature heating heater portion can be arranged around the packed bed of the tantalum raw material Mt over the substantially whole of the packed bed in the axial direction. Further, the low temperature heating heater portion can be arranged around a portion of the raw material reaction tube 2 on the front side of the packed bed of the tantalum raw material Mt. In addition, a heat insulating member (not shown) is arranged at each of the lower end of the high temperature heating heater portion and the upper end of the low temperature heating heater portion to define an internal heating space.

According to such a raw material heating heater, the rear end portion (the gas inflow side portion into which the chlorine gas flows) of the packed bed of the tantalum raw material Mt, which mainly causes the reaction, can be heated to a relatively high temperature by the high temperature heating heater portion. On the other hand, the front end portion (the remaining portion on the side where the chlorine gas flows out) of the tantalum raw material Mt through which the tantalum chloride generated by the reaction at the rear end portion passes can be heated at a lower temperature, preferably 234°C to 468°C.

Accordingly, the tantalum subchlorides those may be contained in the tantalum chloride generated by the reaction at the gas inflow side portion which is the rear end portion of the packed bed of the tantalum raw material Mt is cooled to a temperature of 468°C or lower, which is the boiling point of the tantalum subchlorides, at the remaining portion of the packed bed of the tantalum raw material Mt on the front side in the flow direction of the chlorine gas, where the tantalum subchlorides are liquefied and solidified. This can allow the tantalum subchlorides to be separated more effectively.

If the temperature of the remaining portion of the packed bed of the tantalum raw material Mt is more than 468°C, the tantalum subchlorides are not effectively liquefied and solidified, whereby the content of the tantalum subchlorides in the produced tantalum chloride may not be sufficiently decreased. Further, if the temperature of the remaining portion of the packed bed of the tantalum raw material Mt is less than 234°C, there is a concern that tantalum pentachloride cannot be recovered due to its liquefaction.

From this point of view, the temperature of the remaining portion of the packed bed of the tantalum raw material Mt is more preferably from 234°C to 468°C, and even more preferably from 234°C to 300°C.

The gas inflow side portion of the packed bed of the tantalum raw material Mt can effectively generate TaCl₅ by the reaction temperature (200°C to 700°C) of the tantalum raw material Mt as described above. The reaction temperature of the tantalum raw material Mt can be measured by a thermocouple inserted and arranged in the packed bed of the tantalum raw material Mt.

In the production method as described above, it is preferable to use the high-purity metal tantalum raw material Mt in terms of an increase in the purity of the tantalum chloride to be produced. Specifically, the tantalum raw material Mt is such that the purity of the metallic tantalum is preferably 5 N or more, more preferably 6 N or more, in accordance with the target total content of Ta and CI of the tantalum chloride (99.999% by mass or more, and even 99.9999% by mass or more).

From the same viewpoint, it is preferable that in the tantalum chlorination apparatus 1, at least portions that may be in contact with the tantalum chloride, i.e., the raw material reaction tube 2, the horizontal passage, the communication tube 6 and the chloride recovery chamber 4 in the illustrated embodiment are made of quartz, and the quartz portions are washed with hydrofluoric acid to remove the deposited impurities, prior to the production of the tantalum chloride. The use of quartz is also advantageous in that sealability is significantly improved and the possibility of water contamination becomes extremely low. Ceramics such as alumina are not desirable because they are difficult to be processed and have higher gas permeability.

### EXAMPLES

Next, the tantalum chloride according to the present invention was experimentally produced and the effects of the present invention were confirmed, as described below. However, the descriptions herein are merely illustrative and are not intended to be limited thereto.

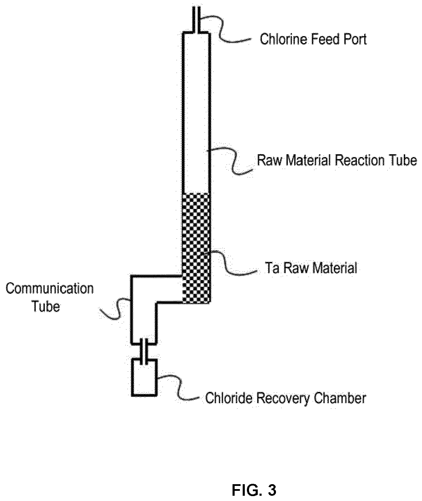

Using each of tantalum chlorination apparatuses as shown in FIG. 2 and FIG. 3, a metallic tantalum raw material was placed in the reaction zone, and the tantalum raw material was heated by the raw material heating heater under each condition as shown in Table 1 while feeding chlorine, to produce a tantalum chloride. Table 1 also shows results of analysis and quantification of the tantalum chloride obtained in the recovery chamber. A component other than those listed in Table 1 of each tantalum chloride are considered to be substantially only chlorine.

In addition, Table 1 shows the maximum reaction temperature at which the reaction temperature of the tantalum raw material was highest during the feeding of the chlorine gas when producing the tantalum raw material. However, in each of Comparative Examples 1 and 2 and Examples 1 to 5, the tantalum raw material was heated such that the reaction temperature of the tantalum raw material was 200°C or more. In Example 5, the heater temperature at the remaining portion (the side where the chlorine gas flows out) of the packed bed of the tantalum raw material was 270°C.

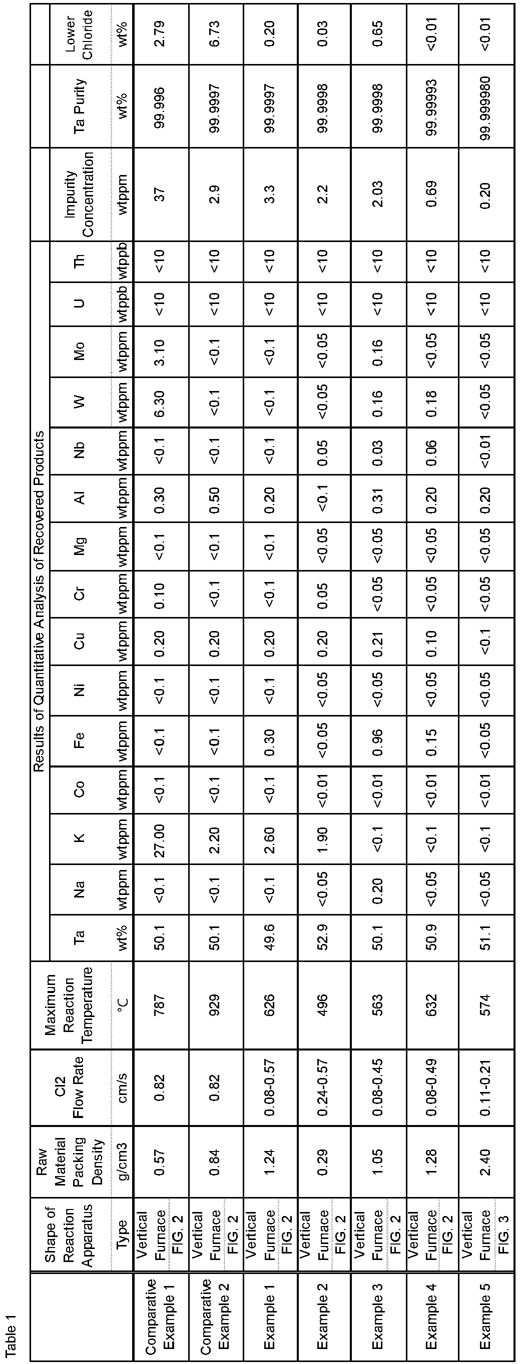

As shown in Table 1, in each of Comparative Examples 1 and 2 and Examples 1 to 4, the tantalum chlorination apparatus as shown in FIG. 2 was used, whereas in Example 5, the tantalum chlorination apparatus as shown in FIG. 3 was used. The tantalum chlorination apparatus of FIG. 3 has a structure similar to that of FIG. 2. However, in the tantalum chlorination apparatus of FIG. 3, the chlorine gas is fed from the upper side which is the rear side of the rear end portion of the packed bed of the tantalum raw material in the raw material reaction tube, and the gaseous tantalum chloride generated in the raw material reaction tube flows through the raw material reaction tube toward the lower side, from which the tantalum chloride flows in the communication tube via the inclined passage toward the lower side, and is then deposited in the recovery chamber.

It is understood from the results as shown in Table 1 that, in all of Examples 1 to 5 where the reaction temperature of the tantalum raw material was 200°C to 700°C, the content of the subchlorides was sufficiently decreased. On the other hand, in Comparative Examples 1 and 2, relatively high volume of subchlorides were produced due to the higher reaction maximum temperature of the tantalum raw material.

Therefore, according to the present invention, it is suggested that the tantalum chloride having a decreased content of tantalum subchlorides can be effectively produced.

### Description of Reference Numerals

- 1: tantalum chlorination apparatus
- 2: raw material reaction tube
- 4: chloride recovery chamber
- 5: chlorine feed port
- 6: communication tube
- 51: test apparatus
- 52: tubular container
- 53: exhaust port
- 54: argon introducing tube
- 55: heater
- 56: boat
- Mt: tantalum raw material

## Claims

1. A tantalum chloride, the tantalum chloride containing TaCl₅, and having a total content of tantalum subchlorides of 1% by mass or less.

2. The tantalum chloride according to claim 1, wherein the total content of the tantalum subchlorides is 0.1% by mass or less.

3. The tantalum chloride according to claim 1 or 2, wherein the tantalum chloride has a total content of Ta and CI of 99.999% by mass or more.

4. The tantalum chloride according to claim 3, wherein the total content of Ta and CI is 99.9999% by mass or more.

5. The tantalum chloride according to any one of claims 1 to 4, wherein the tantalum chloride has a total content of Na, K, Co, Fe, Ni, Cu, Cr, Mg, Al, Nb, W, Mo, U and Th as impurities of 1 ppm by mass or less.

6. A method for producing a tantalum chloride by heating a tantalum raw material in a chlorine atmosphere to chlorinate the tantalum raw material, the method comprising the steps of:
using a tantalum chlorinating apparatus, filling a raw material reaction tube of the tantalum chlorinating apparatus with the tantalum raw material to form a packed bed of the tantalum raw material, and feeding a chlorine gas to the raw material reaction tube to provide the raw material reaction tube with the chlorine atmosphere; and
setting a reaction temperature of the tantalum raw material during heating to a temperature of 200°C to 700°C, and setting a flow rate of the chlorine gas fed to the raw material reaction tube during heating of the tantalum raw material to 0.05 cm/s to 0.82 cm/s.

7. The method according to claim 6, wherein the chlorine gas is allowed to flow in the same direction as a filling direction of the tantalum raw material in the raw material reaction tube.

8. The method according to claim 7, wherein the raw material reaction tube is arranged so as to stand up such that the filling direction of the tantalum raw material in the raw material reaction tube is in a direction inclined or orthogonal to a horizontal plane, and the chlorine gas is allowed to flow from a lower side to an upper side of the packed bed of the tantalum raw material.

9. The method according to claim 7 or 8, wherein, during heating of the tantalum raw material, a gas inflow side portion into which the chlorine gas flows, of the packed bed of the tantalum raw material, is set to the reaction temperature, and a remaining portion on a side where the chlorine gas flows out, of the packed bed of the tantalum raw material, is set to 234°C to 468°C.

10. The method according to any one of claims 6 to 9, wherein a packing density of the tantalum raw material in the raw material reaction tube is from 0.1 g/cm³ to 5.0 g/cm³.
